# EUROPEAN PATENT SPECIFICATION

(11) **EP 3 576 891 B1**
(45) Date of publication and mention of the grant of the patent: **10.03.2021**
(21) Application number: 18700928.7
(22) Date of filing: 25.01.2018
(51) Int. Cl.: B21B 3/00, B21B 45/02

(54) **METHOD OF MAKING ALUMINIUM ROLLED PRODUCT HAVING AT LEAST ONE BRIGHT SURFACE**
VERFAHREN ZUR HERSTELLUNG VON ALUMINIUM-WALZPRODUKTEN MIT MINDESTENS EINER HELLEN OBERFLÄCHE
PROCÉDÉ DE FABRICATION D'UN PRODUIT LAMINE EN ALUMINIUM AYANT AU MOINS UNE SURFACE BRILLANTE

(30) Priority: 31.01.2017 EP 17153945
(43) Date of publication of application: 11.12.2019
(73) Proprietor: Constellium Rolled Products Singen GmbH & Co.KG, 78224 Singen (DE)
(72) Inventor: HERVIEU, Pascal, 38140 Beaucroissant (FR); RIBER, Sébastien, 68600 Neuf-Brisache (FR); HODEL, Ralf, 78234 Engen (DE); BROWNE, David, 8247 Flurlingen (CH)
(74) Representative: Constellium - Propriété Industrielle
(86) International application number: PCT/EP2018/051869
(87) International publication number: WO 2018/141632

(56) References cited:
- EP-A1- 1 028 157
- EP-A1- 2 239 347
- WO-A1-2013/098098
- DE-A1- 19 724 172

## Description

### FIELD OF THE INVENTION

The present invention relates to methods of making aluminium rolled products having at least bright surface, for example for lighting reflector applications.

### BACKGROUND OF THE INVENTION

Bright aluminium sheets have been used for many applications requiring specific aspect or optical properties for example in solar, automotive, cosmetics, decorative or in lighting applications, such as in reflector assemblies. For these applications, aluminium sheets must have various photometric properties to meet requirements of lighting fixture manufacturers. Among the most highly sought photometric properties are high specular reflection (the amount of light reflected by the sheet, as a percentage of incident light), and low diffuse or non-directional reflection of light. These properties have been achieved in the prior art by a combination of careful alloy selection for the sheet stock material and one of two cold rolling practices. In one practice, the sheet stock is cold rolled to a standard mill finish, followed by either chemical/electrochemical finishing or organic coating. In the other practice, at least one surface of aluminium alloy sheet is cold rolled with a specular or bright cold rolled surface using a work roll that has been polished to a smooth finish. This resultant sheet has high specular or mirror like reflectance and very low diffuse reflectance. For providing aluminium rolled products with a bright surface, the surface of the working roll used in a rolling mill to roll the product must have a topography that is engineered to provide the desired brightness. Also of importance is the difficulty in preventing transfer of the aluminium onto the rolls. Because of the friction and high rolling pressures used, great care must be exercised in lubricating the frictional interface between the aluminium work piece and the product in order to insure minimum build-up of aluminium on the product while at the same time attaining a bright product. Also possibly related to the lubricant is the presence of water stains and particles which are aesthetically unattractive and their elimination or reduction is valuable.

Patent application EP2239347 A1 discloses an aluminum alloy sheet for motor vehicles excellent in press formability, resistance to surface roughening and shape fixability which is produced without subjecting the sheet to stabilization treatment by casting a melt, containing 3.0-3.5 mass% Mg, 0.05-0.3 mass% Fe, 0.05-0.15 mass% Si, and further a limited amount of less than 0.1 mass% Mn, a balance substantially being inevitable impurities and Al, into a thin slab having a thickness of 5 to 15 mm in a twin-belt caster so that the cooling rate at 1/4 depth of the thickness of the thin slab is 20 to 200°C/sec; winding the cast thin slab into a coil; subjecting the coiled thin slab to cold rolling with a roll having a surface roughness of 0.2 to 0.7 µm Ra at a cold rolling reduction of 50 to 98%; subjecting the cold rolled thin sheet to final annealing either continuously in a CAL at a holding temperature of 400 to 520°C or in a batch annealing furnace at a holding temperature of 300 to 400°C; and then subjecting the resulting sheet to straightening with a leveler.

Patent application WO2013/098098 A1 discloses a method for rolling stock (1), wherein a water-based cooling lubricant is applied to the rolling stock (1) and/or to at least one roller (20, 22, 30, 32) which forms a roll gap (200, 300), at least one water-soluble and tribologically active additive being added to the water-based cooling lubricant prior to application to the rolling stock and/or to the at least one roller.

Patent application EP1028157 A1 discloses a process for working up and conditioning rolling oil comprises removing dirt and abrasive particles by filtering and with a regulated addition of filter auxiliary aids, and adjusting the electrical conductivity in the purified oil.

Patent application DE19724172 A1 discloses purification of oil containing impurities, including e.g. suspended matter, abraded metal, grease, saponification products and talc, in a transverse flow filtration process.

In order to solve these problems, and provide an efficient and economical process for making aluminium rolled product having at least bright surface, an improved process including improved lubricant and method to maintain this improved lubricant has been designed.

### SUMMARY OF THE INVENTION

An object of the invention is a method for cold rolling bright aluminium rolled products comprising:
(a) Providing a first aluminium alloy rolled product
(b) Rolling said first product with a rolling mill having at least one work roll ground to a finish, with a roughness Ra less than 1 µm, and using a rolling lubricant from a first container comprising less than 150 mg/L of aluminium debris to obtain a second aluminium rolled product having at least one bright surface,
(c) Transferring at least a portion of said rolling lubricant to a second container
(d) Filtering the lubricant from said second container by using cross flow filtration through a membrane, to obtain a cleaned rolling lubricant comprising less than 10 mg/L and preferably less than 5 mg/L of aluminium debris preferentially having a mean diameter of less than 2 µm,
(e) Returning said cleaned rolling lubricant to the first container.

### DESCRIPTION OF THE FIGURES

Figure 1 is a schematic diagram of the method of the invention.
Figure 2 shows the evolution of the content of aluminium debris of the rolling lubricant 51 from the first container 2 with the method of the invention. Start of the cross-filtration process is shown with an arrow.
Figure 3 shows the evolution of the content of aluminium debris of the cleaned lubricant 54.

### DESCRIPTION OF THE INVENTION

Unless mentioned otherwise, definition of standard NF EN 12258 apply.

According to the present invention a method for cold rolling bright aluminium rolled products is provided.

Bright aluminium rolled products are aluminium rolled products having at least one bright surface. By bright surface it is meant a surface having controlled optical properties. Bright surfaces include mirror, rolled bright, semi-specular, mat or structured surfaces. In a preferred embodiment of the invention the specular reflectance of the bright surface, typically a mirror or rolled bright surface, measured for example with a glossmeter according to standard ISO7668 at an angle of 20°, is at least 58% and preferably at least 78%, and the diffuse reflectance, measured for example with a Ulbricht sphere according to standard DIN 5036-3, remains less than 36% and preferably less than 8% . In another embodiment of the invention, typically a mat or structured bright surface, the specular reflectance of the bright surface, measured for example with a glossmeter according to standard ISO7668 at an angle of 60°, is between 15% and 75%, typically less than 50%, and the diffuse reflectance, measured for example with a Ulbricht sphere according to standard DIN 5036-3, remains more than 60% and preferably more than 70% .

A first aluminium alloy rolled product is provided. The aluminium alloy rolled product typically has a thickness between 0.1 and 2 mm and preferably between 0.3 and 1.2 mm. Preferably said aluminium rolled product comprises an aluminium alloy from the 1XXX, 3XXX or 5XXX series, as defined by The Aluminum Association, known to those skilled in the art. This first aluminium alloy rolled product may have standard mill finish surfaces or may have at least one bright surface. Bright products are usually obtained by using a rolling schedule including several rolling passes with decreasing work roll roughness. This first aluminium alloy rolled product is rolled with a rolling mill having at least one work roll polished to a finish with a roughness Ra, measured according to standard DIN EN ISO 4288, less than 1 µm, and preferentially a smooth finish with Ra less than 0.1 µm and preferably Ra less than 0.05 µm and even more preferably Ra less than 0.03 µm. It is noted that work rolls polished to a finish with a roughness Ra between 0.1 and 1 µm are particularly adapted for mat or textured bright surfaces. In an embodiment both work rolls have a roughness Ra less than 1 µm, preferentially less than 0.1 µm, and preferably Ra less than 0.05 µm or even Ra less than 0.03 µm. The rolling mill may be of the type duo (two rolls), quarto (4 rolls) or sexto (6 rolls). In a preferred embodiment the rolling mill is of the type duo, because the roughness of the work roll is then not affected by the roughness of other rolls and because the aluminium transfer between the roll and the sheet is easier to manage. A second aluminium rolled product having at least one bright surface is obtained by rolling. Preferably the roughness Ra of said at least one bright surface measured according to standard DIN EN ISO 4288 and/or by using white light interferometry is less than 0.1 µm, preferably less than 0.05 µm, and even more preferably Ra less than 0.03 µm. In an embodiment said bright surface has a roughness Ra between 0.01 µm and 0.02 µm. In another embodiment related to mat or textured surfaces the roughness Ra of said at least one bright surface measured according to standard DIN EN ISO 4288 and/or by using white light interferometry is more than 0.1 µm or even more than 0.2 µm and less than 1 µm, preferably less than 0.5 µm, and even more preferably Ra less than 0.4 µm. In another embodiment said bright surface has a roughness Ra between 0.3 µm and 0.5 µm. In yet another embodiment said bright surface has a roughness Ra between 0.8 µm and 1.2 µm.

A rolling lubricant stored in a first container is used to cool down and lubricate the rolling mill. The present inventors observed that the quality of said bright surface is improved and consistently maintained if the rolling lubricant comprises less than 150 mg/L of aluminium debris, preferably less than 100 mg/L and preferentially less than 50 mg/L. During rolling, the content of aluminium debris in the rolling lubricant however continuously increases due to the frictional interface between the steel working roll and the rolled product. The method of the invention enables to maintain the content of aluminium debris less than 150 mg/L during several months of operations of the rolling mill without complete replacement of the rolling lubricant as only punctual additions to maintain the total quantity of lubricant are needed. Contrary to other expensive solutions wherein the rolling lubricant is replaced as soon as the content of aluminium debris reaches a value above 150 mg/L, in the method of the invention an efficient filtering process of the rolling lubricant is provided. According to the invention at least a portion of said rolling lubricant is transferred to a second container. The portion which is transferred is sufficient to maintain a flow of lubricant enabling a control of the quantity of aluminium debris is the first container. The lubricant from said second container is filtered by using cross flow filtration through a membrane, to obtain a cleaned rolling lubricant comprising less than 10mg/L of aluminium debris preferentially having a mean diameter of less than 2 µm and more preferentially having a mean diameter of less than 1 µm. Crossflow filtration, also known as tangential flow filtration, is a type of filtration wherein the majority of the feed flow travels tangentially along the surface of the filter, rather than across into the filter. The solids debris are rejected into this main flux and are recycled in a working tank. The filtered liquid goes in the perpendicular direction (crossflow) to this main flux. The two different and perpendicular directions of the dirty oil and the filtrate enable a very limited clogging of the filter. Crossflow filtration is different from dead-end filtration in which the feed is passed through a membrane or bed, the solids being trapped in the filter and the filtrate being released at the other end. The present inventors observed that crossflow filtration is particularly suitable to obtain a significant flow of a cleaned rolling lubricant comprising less than 10 mg/L and preferably 5 mg/L of aluminium debris for the rolling of bright products. Indeed the present inventors observed that a particular aspect of the bright products rolling is that the aluminium debris which are produced are particularly small, typically less than 2 µm diameter and are not easily filtered with standard techniques, such as stack filter with filtration aids, such as diatomaceous earths, clay or cellulose. Eliminating large particles with a diameter of more than 2 µm and even more preferably of more than 1 µm or even of more than 0.5 µm, also contributes to the product quality as hard large aluminium debris can produce defect on the aluminium rolled product surfaces. Advantageously the cross flow filtration is carried out through at least one cylindrical ceramic membrane, preferably with a porosity less than 0.3 µm and preferentially less than 0.2 µm. The ceramic membranes are preferably made of alpha alumina, carbide silicon, zirconia or titanium oxide or combinations thereof. Alternatively, metallic membranes made of stainless steel with a similar porosity can also be used. In yet another embodiment the cross flow filtration is carried out with filter membrane assembly having a plurality of filter membranes dynamically moving. The ceramic membranes can also have an hydrophobic behaviour that limits the humidity adsorption into the support and helps maintaining high flow rate during operation.

The size and characteristics of the membrane are chosen to remove aluminium debris without changing the composition of the rolling oil, particularly functional additives should preferably remain in the rolling lubricant.

The cleaned rolling lubricant comprising less than 10 mg/L and preferably less than 5 mg/L of aluminium debris preferentially having a mean diameter of less than 2 µm, is then returned to the first container with a flow sufficient to maintain less than 150 mg/L of aluminium debris in the first container.

Preferably the water content of the rolling lubricant from said first container is less than 0.1 g/L and the water content of the cleaned rolling lubricant is less than 0.05 g/L. In an embodiment a water extraction device is connected to said second container. The water extraction device may be a degassing device or an absorption device such as for example a cellulose filter. In another embodiment, the temperature of the rolling lubricant during cross flow filtration is between 90 °C and 100 °C to permit evaporation of water. Maintaining the water content of the rolling lubricant from the first container to less than 0.1 g/L is advantageous to avoid water stains on the second rolled aluminium product.

The rolling lubricant temperature from the first container is preferably maintained between 30 °C and 50 °C. Advantageously the temperature of the rolling lubricant during cross flow filtration is between 50 °C and 100 °C. If the temperature of the rolling lubricant during cross flow filtration is between 90 °C and 100 °C, a cooling device may be needed to obtain the desired rolling lubricant temperature in the first container. In another embodiment the temperature of the rolling lubricant during cross flow filtration is between 50 °C and 70 °C.

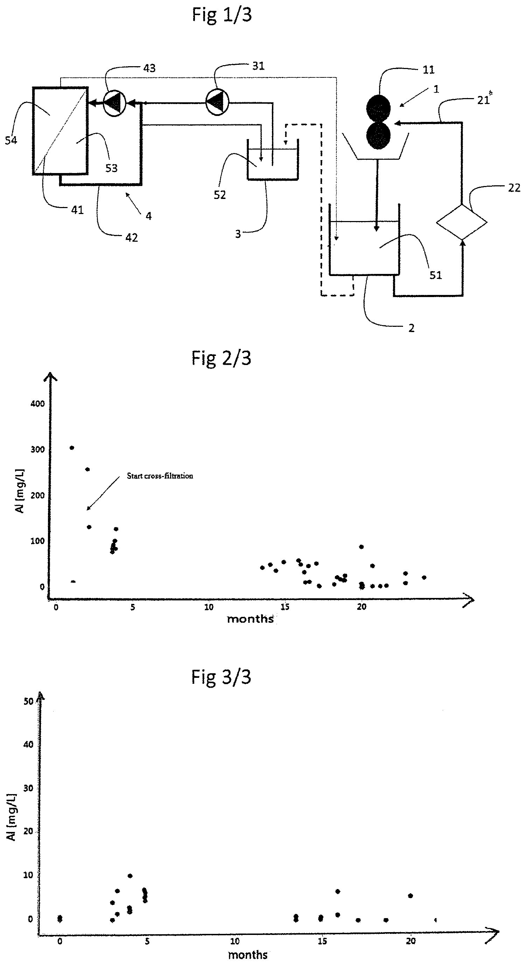

Figure 1 is a schematic diagram of devices and flows suitable to carry out the method of the present invention. A rolling mill 1 with at least one work roll 11 ground to a smooth finish is used to roll a first aluminium rolled product into a second aluminium rolled product, having at least one bright surface. A rolling lubricant 51 from a first container 2 comprising less than 150 mg/L of aluminium debris is used for rolling. The rolling lubricant is continuously filtered in a loop 21, through a regular stack filter 22. At least a portion of the rolling lubricant 51 is transferred to a second container 3. The transfer may be done continuously or by batch. The lubricant 52 from the second container 3 is filtered by using cross flow filtration 4. A pump 31 is used to feed a loop of cross filtration 42 maintained by a pump 43. The pump 43 is sufficient to obtain cross filtration through a cross-filtration membrane 41. The rolling lubricant in the section 53 tangentially crosses the membrane 41 and a cleaned rolling lubricant 54 comprising less than 10 mg/L of aluminium debris and preferably less than 5 mg/L of aluminium debris preferentially having a mean diameter of less than 2 µm, is obtained. The cleaned rolling lubricant 54 is returned to the first container 2.

### EXAMPLE

A duo-rolling mill used for cold rolling bright aluminium rolled has been operated with a method of the invention as described in Figure 1. The cross-filtration membrane was made of Ti-Zr oxide with an alpha alumina layer and had a cut-off of 0.1 µm which enabled that the filtered rolling oil had a mean diameter of less than 2 µm. The mill was used several months without any replacement of the rolling oil, only punctual additions to maintain the total quantity of lubricant.

The content of aluminium debris of the rolling lubricant 51 from the first container 2 and of the cleaned lubricant 54 are provided in Figure 2 et 3, respectively.

## Claims

1. A method for cold rolling bright aluminium rolled products comprising:
(a) Providing a first aluminium alloy rolled product
(b) Rolling said first product with a rolling mill (1) having at least one work roll ground to a finish (11), with a roughness Rₐ less than 1 µm, and using a rolling lubricant (51) from a first container (2) comprising less than 150 mg/L of aluminium debris to obtain a second aluminium rolled product having at least one bright surface,
(c) Transferring at least a portion of said rolling lubricant to a second container (3)
(d) Filtering the lubricant from said second container (52) by using cross flow filtration (4) through a membrane (41), to obtain a cleaned rolling lubricant (54) comprising less than 10 mg/L and preferably less than 5 mg/L of aluminium debris preferentially having a mean diameter of less than 2 µm,
(e) Returning said cleaned rolling lubricant (54) to the first container.

2. A method according to claim 1 wherein the water content of the rolling lubricant from said first container is less than 0.1 g/L and the water content of said cleaned rolling lubricant is less than 0.05 g/L.

3. A method according to claim 1 or claim 2 wherein the cross flow filtration is carried out through at least one cylindrical ceramic membrane

4. A method according to claim 1 or claim 2 wherein the cross flow filtration is carried out with filter membrane assembly having a plurality of filter membranes dynamically moving.

5. A method according to anyone of claim 1 to 4 wherein the rolling lubricant temperature is between 30 °C and 50 °C.

6. A method according to anyone of claim 1 to 5 wherein the cross flow filtration is carried out at a temperature between 50 °C and 100 °C.

7. A method according to anyone of claim 1 to 6 wherein the roughness Ra of said at least one bright surface measured according to standard DIN EN ISO 4288 and/or by using white light interferometry is less than 0.1 µm, preferably less than 0.05 µm, and even more preferably Ra less than 0.03 µm.

8. A method according to anyone of claim 1 to 7 wherein said rolling lubricant from said first container comprises less than 50 mg/L of aluminium debris.

9. A method according to anyone of claim 1 to 8 wherein said aluminium rolled product comprises an aluminium alloy from the 1XXX, 3XXX or 5XXX series.

10. A method according to anyone of claim 1 to 9 wherein said at least one work roll is ground to a smooth finish with a roughness Rₐ less than 0.1 µm.

## Patentansprüche

1. Verfahren zum Kaltwalzen von blankgewalzten Aluminiumprodukten, das Folgendes umfasst:
(a) Bereitstellen eines ersten gewalzten Aluminiumlegierungsprodukts
(b) Walzen des ersten Produkts mit einem Walzwerk (1), das wenigstens eine zu einem Schliff gewetzte Arbeitswalze (11) mit einer Rauheit Rₐ von weniger als 1 µm aufweist, und unter Verwendung eines Walzschmiermittels (51) aus einem ersten Behälter (2), der weniger als 150 mg/L Aluminiumabrieb umfasst, um ein zweites gewalztes Aluminiumprodukt zu erhalten, das wenigstens eine blanke Oberfläche aufweist,
(c) Übertragen wenigstens eines Anteils des Walzschmiermittels in einen zweiten Behälter (3)
(d) Filtern des Schmiermittels aus dem zweiten Behälter (52) durch Verwenden einer Querstromfiltration (4) durch eine Membran (41) hindurch, um ein gereinigtes Walzschmiermittel (54) zu erhalten, das weniger als 10 mg/L und bevorzugt weniger als 5 mg/L Aluminiumabrieb umfasst, der vorzugsweise einen mittleren Durchmesser von weniger als 2 µm aufweist,
(e) Rückführen des gereinigten Walzschmiermittels (54) in den ersten Behälter.

2. Verfahren nach Anspruch 1, wobei der Wassergehalt des Walzschmiermittels aus dem ersten Behälter weniger als 0,1 g/L beträgt und der Wassergehalt des gereinigten Walzschmiermittels weniger als 0,05 g/L beträgt.

3. Verfahren nach Anspruch 1 oder 2, wobei die Querstromfiltration durch wenigstens eine zylindrische Keramikmembran hindurch durchgeführt wird.

4. Verfahren nach Anspruch 1 oder 2, wobei die Querstromfiltration mit einer Filtermembrananordnung durchgeführt wird, in der sich mehrere Filtermembranen dynamisch bewegen.

5. Verfahren nach einem der Ansprüche 1 bis 4, wobei die Walzschmiermitteltemperatur zwischen 30 °C und 50 °C liegt.

6. Verfahren nach einem der Ansprüche 1 bis 5, wobei die Querstromfiltration bei einer Temperatur zwischen 50 °C und 100 °C durchgeführt wird.

7. Verfahren nach einem der Ansprüche 1 bis 6, wobei die Rauheit Ra der wenigstens einen blanken Oberfläche, gemessen gemäß Norm DIN EN ISO 4288 und/oder durch Verwenden von Weißlichtinterferometrie, weniger als 0,1 µm, bevorzugt weniger als 0,05 µm und sogar noch stärker bevorzugt Ra weniger als 0,03 µm beträgt.

8. Verfahren nach einem der Ansprüche 1 bis 7, wobei das Walzschmiermittel aus dem ersten Behälter weniger als 50 mg/L Aluminiumabrieb umfasst.

9. Verfahren nach einem der Ansprüche 1 bis 8, wobei das gewalzte Aluminiumprodukt eine Aluminiumlegierung aus der Serie 1XXX, 3XXX oder 5XXX umfasst.

10. Verfahren nach einem der Ansprüche 1 bis 9, wobei die wenigstens eine Arbeitswalze zu einem glatten Schliff mit einer Rauheit Rₐ von weniger als 0,1 µm gewetzt wird.

## Revendications

1. Procédé de laminage à froid de produits laminés en aluminium brillant comprenant :
(a) La fourniture d'un premier produit laminé en alliage d'aluminium
(b) Le laminage dudit premier produit au moyen d'un laminoir (1) ayant au moins un cylindre de travail rectifié jusqu'à une finition (11), avec une rugosité Rₐ inférieure à 1 µm, et au moyen d'un lubrifiant de laminage (51) provenant d'un premier récipient (2) comprenant moins de 150 mg/L de débris d'aluminium pour obtenir un second produit laminé d'aluminium ayant au moins une surface brillante,
(c) Le transfert d'au moins une partie dudit lubrifiant de laminage vers un second récipient (3)
(d) La filtration du lubrifiant dudit second récipient (52) au moyen d'une filtration tangentielle (4) à travers une membrane (41), pour obtenir un lubrifiant de laminage nettoyé (54) comprenant moins de 10 mg/L et de préférence moins de 5 mg/L de débris d'aluminium ayant préférentiellement un diamètre moyen inférieur à 2 µm,
(e) Le retour dudit lubrifiant de laminage nettoyé (54) dans le premier récipient.

2. Procédé selon la revendication 1, dans lequel la teneur en eau du lubrifiant de laminage dudit premier récipient est inférieure à 0,1 g/L et la teneur en eau dudit lubrifiant de laminage nettoyé est inférieure à 0,05 g/L.

3. Procédé selon la revendication 1 ou la revendication 2, dans lequel la filtration tangentielle est effectuée à travers au moins une membrane céramique cylindrique.

4. Procédé selon la revendication 1 ou la revendication 2, dans lequel la filtration tangentielle est effectuée au moyen d'un ensemble de membranes filtrantes ayant une pluralité de membranes filtrantes se déplaçant dynamiquement.

5. Procédé selon l'une quelconque des revendications 1 à 4, dans lequel la température du lubrifiant de laminage est comprise entre 30 °C et 50 °C.

6. Procédé selon l'une quelconque des revendications 1 à 5, dans lequel la filtration tangentielle est effectuée à une température comprise entre 50 °C et 100 °C.

7. Procédé selon l'une quelconque des revendications 1 à 6, dans lequel la rugosité Rₐ de ladite au moins une surface brillante mesurée selon la norme DIN EN ISO 4288 et/ou au moyen d'une interférométrie en lumière blanche est inférieure à 0,1 µm, de préférence inférieure à 0,05 µm, et encore plus préférablement, la Rₐ étant inférieure à 0,03 µm.

8. Procédé selon l'une quelconque des revendications 1 à 7, dans lequel ledit lubrifiant de laminage provenant dudit premier récipient comprend moins de 50 mg/L de débris d'aluminium.

9. Procédé selon l'une quelconque des revendications 1 à 8, dans lequel ledit produit laminé d'aluminium comprend un alliage d'aluminium de la série 1XXX, 3XXX ou 5XXX

10. Procédé selon l'une quelconque des revendications 1 à 9, dans lequel ledit au moins un rouleau de travail est broyé en une finition lisse avec une rugosité Rₐ inférieure à 0,1 µm.
